# EUROPEAN PATENT APPLICATION

(11) **EP 2 957 984 A1**
(43) Date of publication of application: **23.12.2015**
(21) Application number: 14305930.1
(22) Date of filing: 18.06.2014
(51) Int. Cl.: G06F 1/26, G06F 1/28, G06F 1/30, G06F 1/32

(54) **Method for power management and corresponding apparatus**

(71) Applicant: Thomson Licensing, 92130 Issy-les-Moulineaux (FR)
(72) Inventor: Maetz, Pascal, 35576 Cesson-Sévigné (FR); Rambault, Claude, 35576 Cesson-Sévigné (FR); Lequeux, Régis, 35576 Cesson-Sévigné (FR)
(74) Representative: Huchet, Anne

(57) **Abstract**

Power management of a peripheral device (11,12,13,14,50) that receives its power from a host device (10) via an interface (101,102,103,104) of the host device providing a data communication link between the peripheral device and the host device. The host device also provides power to the peripheral device via the interface, via a single cable. In a set of successive steps (60,61,62,63), the peripheral device determines the maximum level of power that it can draw from the host device without causing a power surge/drop, so that the peripheral device can function correctly with the power supplied by the host device.

## Description

### 1. Technical field.

The present disclosure generally relates to power consumption control for a device, and in particular power consumption control of a first device of power received from a second device via a single interface cable that also provides a data communication between the first and the second device.

### 2. Technical background.

Data communication interfaces for electronic devices such as Universal Serial Bus (USB), Mobile High definition Link (MHL) and High Definition Multimedia Interface (HDMI) allows host devices and peripheral devices to communincate and additionally to supply power to the peripheral devices via a single interface cable. For example a smart phone or a tablet PC can communicate with a host device while receiving power from the host device using the same interface cable. For the peripheral device, this reduces battery use and/or allows battery charging. The single cable feature is particularly appreciated by users of these peripherals because it avoids extra wiring as there is no need for an external power supply. However, the amount of power supplied by a USB, MHL or HDMI port is limited in order to protect the host device from overload charge, the host having limited means for providing power to external devices, e.g. to save cost. Drawing of excess power results in a power surge / drop of the power supplied by the host device, and in some cases also cuts all communication via the interface. Each connection standard, such as the previously mentioned USB, HDMI and MHL standards, defines its own power supply limits. For HDMI, the maximum power supplied is only 0.25W as it is for the purpose of awakening a sleeping sink device. MHL 1.0 provides 2.5W, MHL 2.0 provides 4.5W and MHL 3.0 provides 10W which allows low power devices to operate. For USB 1.0, maximum power is limited to 0.75W, for USB 2.0 2.5W, and for USB 3.0 4.5W. Thus, even within a single standard, maximum allowable power depends on the version number. In practice, the maximum power that can be supplied by an interface of a host device may be in excess of what is strictly defined in the standard that applies to the interface type as it depends for example on the presence / power consumption of other peripheral devices connected to the host device. For example, European patent application EP 2728439 A1, published on May 7, 2014 describes that under certain conditions, a host device may allow a peripheral device to draw more power than is specified in the standard that applies to the interface to which the peripheral device is connected.

It is thus not easy to determine the maximum power consumption limit that a peripheral device should respect in order to avoid a power surge / drop. Limiting power consumption to what is specified by the specification of the standard and version of the interface to which the peripheral device is connected may unnecessarily restrict maximum power consumption. Even more so if a security margin is added to the limitation specified by the standard to which the interface applies in order to avoid reaching the limit set by the standard and the version in order to avoid undesired/unexpected behavior due to a power surge/drop, which may be unnecessarily penalizing a peripheral device which power requirements are permanently or occasionally close to that maximum.

### 3. Summary.

The present disclosure aims at alleviating some of the inconveniences of prior art.

To this end, the disclosure discloses a method of power management implemented by a first device connected to a second device via an interface of the second device, the interface providing a data communication link for data communication between the first device and the second device and a power supply for the first device, the method comprising: storing of a maximum level of power drawn from the second device, as a limit level; upon each subsequent reestablishing of power supplied by the second device to the first device after a drop of power from the power supply due to the first device drawing an excess level of power from the second device, limiting the level of power drawn from the second device to a maximum level that is lower than the stored limit level, and storing of the maximum level as the limit level.

According to a variant embodiment of the method of power management, it further comprises a restart of the first device after the reestablishing of power supplied by the second device.

According to a variant embodiment of the method of power management, the storing of the maximum level as the limit level comprises a storing of an identifier of the second device and associating of the identifier with the limit level.

According to a variant embodiment of the method of power management, the limit level, after a predetermined delay of time without experiencing a subsequent drop of the power supplied by the second device to the first device, is stored as the limit level to be used for the second device.

According to a variant embodiment of the method of power management, the limit level, after a predetermined delay of time without experiencing a subsequent drop of the power supplied by the second device to the first device, is adjusted by increasing the limit level until a drop of the power supplied by the second device is caused due to the first device drawing an excess level of power from the second device, and setting the limit level to the last stored limit value minus a security margin.

According to a variant embodiment of the method of power management, the limiting the level of power drawn from the second device comprises reducing of a clock speed of at least one processing unit of the first device.

According to a variant embodiment of the method of power management, the limiting the level of power drawn from the second device comprises spreading out over time of executing of tasks programmed for being executed upon startup of the first device.

According to a variant embodiment of the method of power management, the limiting the level of power drawn from the second device comprises reducing of at least one functionality of the first device.

The disclosure also relates to a peripheral device, the peripheral device being connected to a host device via an interface of the host device providing a data communication link for communication between the peripheral device and the host device and for providing a power supply to the peripheral device, the peripheral device comprising: a memory for storing of a maximum level of power drawn from the host device as a limit level; a power controller for, upon each subsequent reestablishing of power supplied by the host device to the peripheral device after a drop of power from the power supply due to the peripheral device drawing an excess level of power from the host device, limiting the level of power drawn from the host device to a maximum level that is lower than the limit level stored in the memory, and storing of the maximum level as the limit level in the memory.

According to a variant embodiment of the peripheral device, it further comprises a reset unit for start up of the peripheral device after the reestablishing of power supplied by the host device.

### 4. List of figures.

More advantages of the present principles will appear through the description of particular, non-restricting embodiments of the disclosure.

The embodiments will be described with reference to the following figures:
Figure 1 is a block diagram of a typical host device.
Figure 2 is a power consumption graph of a typical peripheral device.
Figure 3 is a further power consumption plot of the typical peripheral device of figure 2.
Figure 4 is a power consumption graph of a peripheral device according to the principles of the present disclosure.
Figure 5 is an example peripheral device implementing the principles of the present disclosure.
Figure 6 is a flow chart of an advantageous embodiment.

### 5. Detailed description.

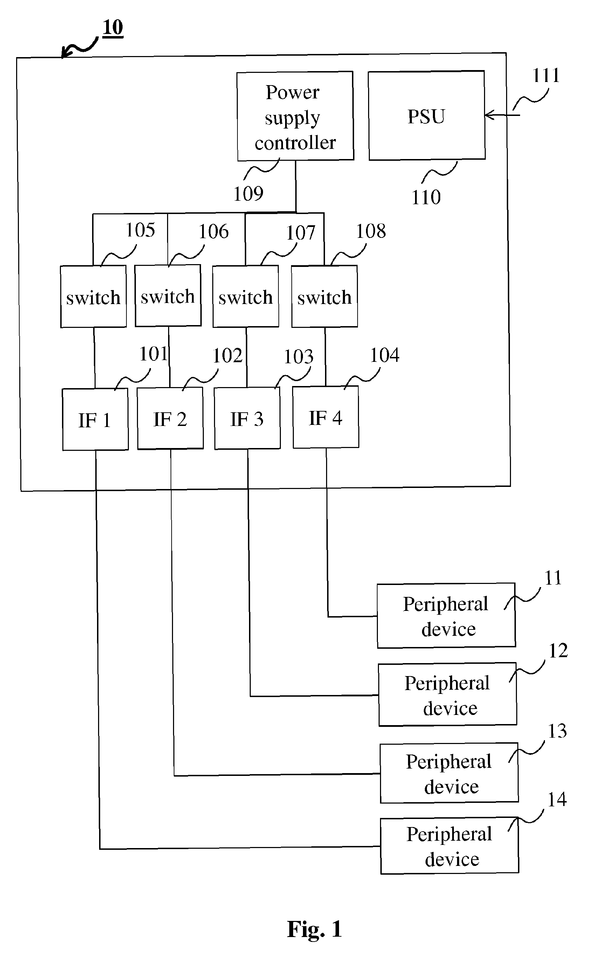

**Figure 1** is a block diagram of a typical host device. The host device (10) comprises multiple peripheral interfaces (101, 102, 103, and 104) for connecting peripheral devices (11, 12, 13, and 14). The host device further comprises a power supply controller (109) for controlling the power supplied to the peripheral interfaces. The peripheral interfaces are equipped with switches (105,106,107,108) that are controlled by the power supply controller. A power supply unit (110) receives mains power (111) and provides power to the host device internal components and to the peripherals. Not shown in this diagram are further components needed for the functioning of the host device, such as a central processing unit, memory, an internal data communication bus, a clock unit. The host device can be any kind of device capable of connecting with peripheral devices such as: a digital television set, a set top box, a personal computer, or a data communication hub. The power supply controller monitors the power consumption of the peripherals. If the power supply controller detects that a peripheral draws excess power from one of its interfaces, the controller instructs the switch that is connected to the interface to disconnect the interface, thereby interrupting the power supplied to the peripheral. The controller resets the switch after a predetermined delay, or when a peripheral reconnection is detected on the interface, or when it receives an instruction to reset the switch (e.g. from a PC user resetting a USB port in a configuration menu, or from a detection circuit detecting a peripheral disconnection, or from a power management unit that periodically retries to establish power on the port). According to the embodiment of the host, the host accepts that some of the peripherals draw (temporarily) more power than normally allowed (e.g., superior to a limit set by a standard specification for the type of interface used). For some hosts, this is allowed as long as the total power supplied to all of the peripherals remains within a predetermined limit.

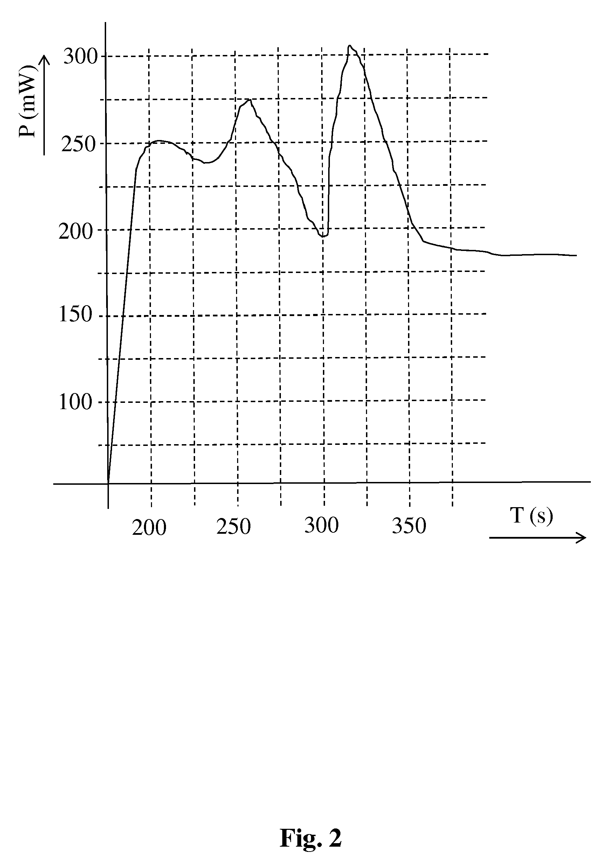

**Figure 2** is a power consumption graph of a typical peripheral device. The power drawn by the peripheral device is plotted on the y-axis (in milli Watts or mW). The time is plotted on the x-axis (in seconds). It can be observed that when the peripheral is connected to the host, the power consumption of the peripheral rapidly increases to 250 mW, varies around 200 to 300 mW, and then stabilizes to 180 mW as the peripheral has started up and is ready for use. Other consumption fluctuations (not shown) arise when the device enters / exits from/to standby, and when the device executes functions (programmed, or launched manually by a user).

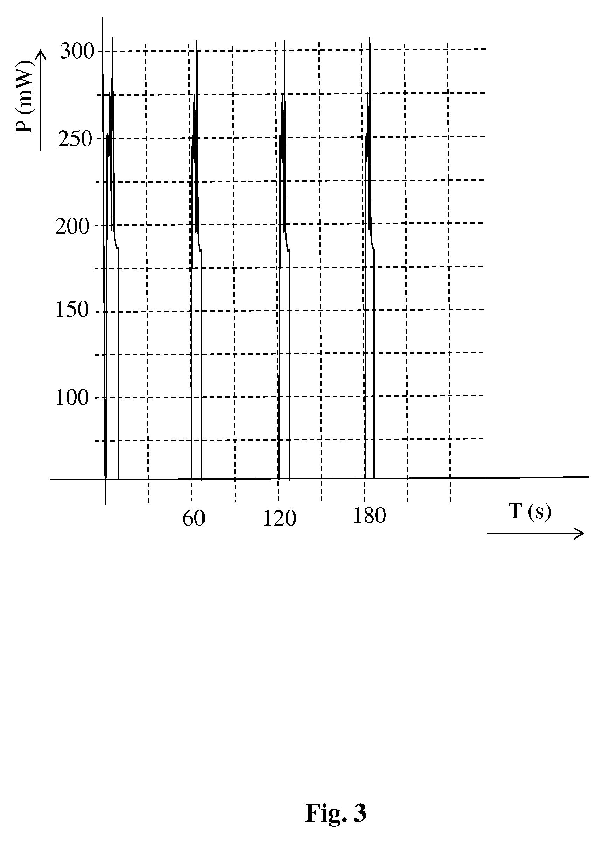

**Figure 3** is a further power consumption plot of the typical peripheral device of figure 2. As an example, the maximum allowed power that the peripheral device is allowed to draw from the host device is set to 275 mW. At t=0, the device starts up and very quickly, its power consumption peaks at more than 300mW. As this value exceeds the maximum allowed power, the host device interrupts its power supply to the peripheral e.g. after 10 seconds. At t=60, the host has reset its interface that connects the peripheral to the host device, power supply is reestablished and the peripheral restarts, and power supply is again interrupted ten seconds later. This results in an endless loop of power interruptions for the peripheral device, and possibly in endlessly restarting of the peripheral device.

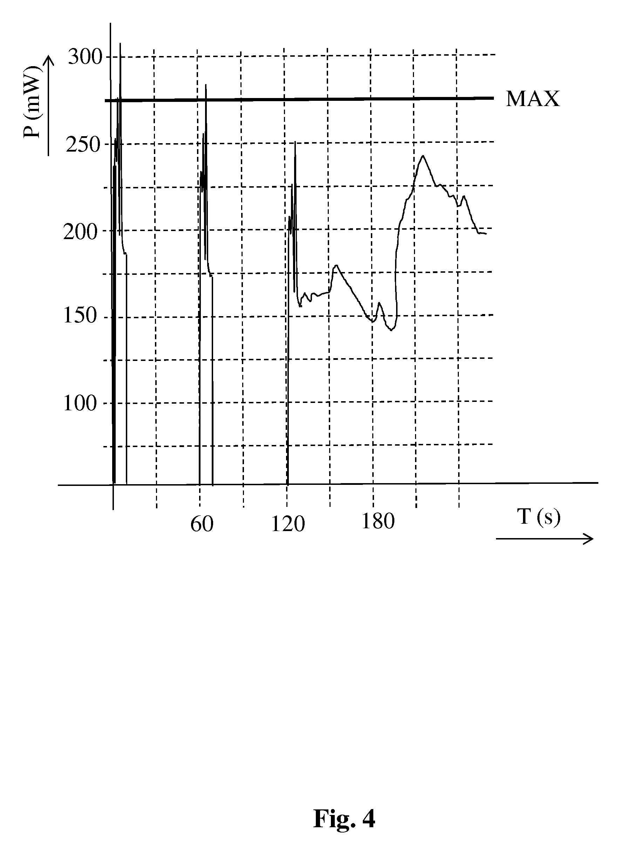

**Figure 4** is a power consumption graph of a peripheral device that implements the principles of the present disclosure. At t=0, the peripheral device starts up and monitors the maximum level of power drawn from the host device (310mW) and stores it as a limit level. As this maximum level exceeds the maximum level (MAX) of power that the peripheral is allowed to draw from the host device (310mW > 275mW), the host interrupts the power supply for the peripheral device, which results in a power surge/drop for the peripheral device. At t=60, the host has reset its interface to which the peripheral is connected and reestablishes the power supply to the peripheral device, and the peripheral device attempts to start up again. This time the peripheral device limits the maximum level of power drawn from the host device to a maximum level (280mW) that is lower than the stored limit level (310mW) and stores the determined maximum level (280mW) as the new limit level. As this limit level still exceeds the maximum level of power that the peripheral is allowed to draw from the host device (280mW > 250 mW), the host again interrupts the power supply for the peripheral device. At t=120, the host has reestablished power for the peripheral device and the peripheral starts up again. This time the peripheral device limits the maximum level of power drawn from the host device to a level that is lower (250mW) than the stored limit level (280mW), and stores the determined maximum level (250mW) as the new limit level. As the maximum level of power drawn from the host device is now below the maximum level (MAX) of power that the peripheral is allowed to draw from the host device (250mW < 275mW), the host device does no longer interrupt the power supply to the peripheral device, which continues its restart until it is operational, while taking care not to draw more than the stored limit level of power from the host. According to the present example, the limit was in each iteration of the method lowered with a constant value (20mW). According to a variant embodiment, limiting is done through computing a percentage of the previously stored limit level (e.g. 10%, or 15% or 25%), which allows in some cases to converge more quickly to a limit that is below the maximum level of power that the peripheral is allowed to draw from the host device. According to a further variant embodiment, the percentage is increased in a subsequent iteration of the method if the number of iterations is above a determined threshold (e.g., after having applied a percentage of 10% during the first 3 iterations, the percentage is increased to 25% for the next iteration(s) in order to speed up the convergence to a maximum level of power that is accepted by the host device).

According to a variant embodiment, the peripheral device does not restart when the host interrupts power supply to the peripheral device. This embodiment is particularly advantageous when the peripheral device additionally has an own power source such as a battery (e.g. the peripheral device is a smart phone or a tablet PC) and allows the peripheral device to avoid time-consuming restarts. When the host interrupts power supply for the peripheral device, the peripheral device switches to battery power. A part from absence of the restarting phase of the peripheral device, the method is the same as described above.

The method can thus be seen as a calibration process in which the peripheral device stepwise determines the maximum power that it can draw from the host device without causing a power surge/drop. The method allows determining the limit value to use in only several steps, e.g. during a connection phase of connecting the peripheral to the host device, or during start up of the peripheral device. Alternatively, the calibration step is executed upon a user request, e.g. via a configuration menu on the peripheral device.

Advantageously, once the maximum power is determined, it is stored for future connections to the same host. This variant embodiment is advantageous for example if the peripheral device, while remaining connected to the host, enters a standby state and then awakes from that standby state, or the device is disconnected from the host and reconnected later. The host is identified for example by a device identifier of the host that is received by the peripheral device over the data communication link, or a host address. The maximum power (i.e. the limit level) is associated with the host device identifier / address and both are for example stored in a flash memory when the limit level is stored. This way, once the limit level is determined for a given host, the peripheral device does not need to determine it again upon exit from standby state or upon reconnection after a disconnection to the same host, it is sufficient to read the host identifier and lookup the limit level that is associated with the host identifier.

According to an advantageous variant embodiment, when a limit level is determined that does not cause a power surge/drop, the limit level is increased until the power consumption of the peripheral causes a power surge/drop, and the limit level to use for the host device is adjusted to the limit level that caused the power surge/drop minus a (determined) security margin. An example security margin is 10, 15 or 25 percent of the limit level that caused the power surge/drop. For example, considering the previous example given for figure 4, the host device supplies a maximum of 275mW, and the stored limit level for the peripheral was set to 260mW in several steps. According to the here described variant embodiment, the limit level is then increased again until the power consumption of the peripheral causes a power surge/drop, that is, at 275mW. Then the limit level to use for the host device is adjusted to the limit level that caused the power surge/drop (275mW) minus a determined security margin (e.g. 10%, 15%; or 25%); this determines the final limit level to use for the host device (e.g 275-(27.5) =247.5mW when the security margin is set to 10%). This variant embodiment thus allows to more precisely determine the power level that causes a power surge/drop, and then for operation of the peripheral to limit the power drawn from the host device to a value that is at safe distance from the value that would cause a power surge/drop.

According to a variant embodiment, the level of power drawn from the host device is limited to the determined limit level through reduction of a clock speed of one or more processing units in the peripheral device. Most of the time, a peripheral device will draw the most power during a relatively short period when it starts up, and this feature will thus result in a slower startup of the peripheral, while it may not be needed to reduce the CPU clock speed during normal operation of the device, thereby not resulting in a slower device once it is operational.

According to a variant embodiment, the level of power drawn is limited to the determined limit level through a spreading out over time of execution of tasks that are programmed for execution e.g. during startup of the peripheral. Again, as the peripheral device startup is relatively demanding for the peripheral device, e.g. it is in this phase that components of the peripheral are initialized and checked for correct functioning, the startup is relatively demanding in terms of processing unit use, and power consumption. Spreading out over time of the execution of the tasks that are programmed for execution, e.g. during startup, will thus avoid peak power consumption at startup.

According to a variant embodiment, the level of power drawn is limited to the determined limit level through the reducing of one or more functionalities of the peripheral. For example, power consumption is reduced by removing the possibility to set the LCD backlight of a peripheral device to full brightness, or the possibility to execute power hungry gaming applications is reduced, or transmission of WiFi is reduced to a strict minimum, or power down unneeded or unused peripheral devices that are connected to the peripheral device and for which the peripheral device acts as a host.

The embodiments described can be combined to form particular advantageous embodiments.

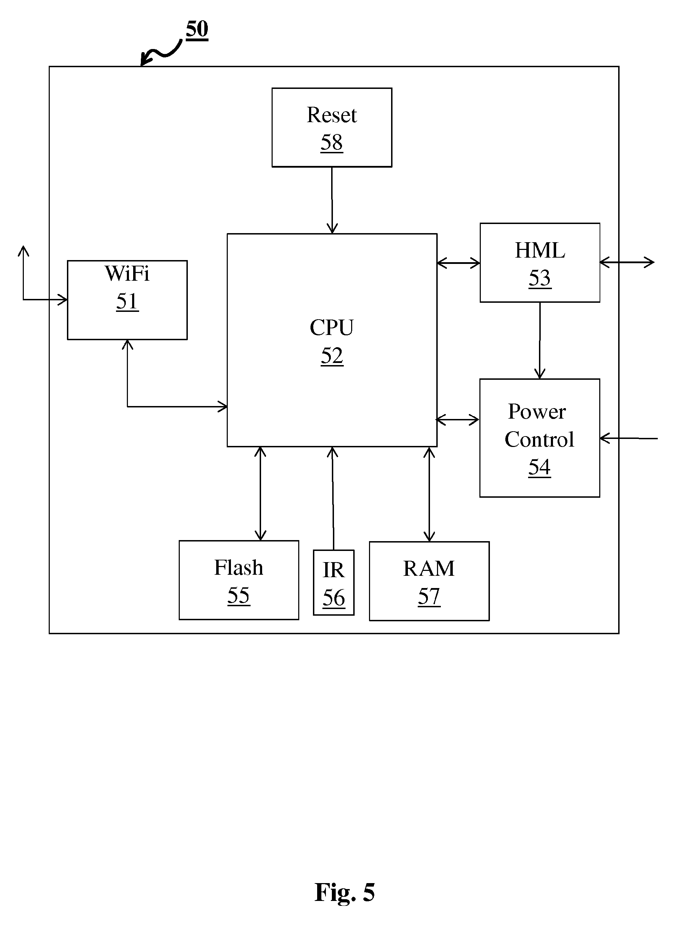

**Figure 5** is an example peripheral device implementing the principles of the present disclosure. The device 50 is for example a low-power Set Top Box (STB). The device comprises the following components: an optional reset unit 58, for restarting the device in case of a power surge/drop in absence of a battery; a central processing unit 52, that receives input from an external source via a WiFi interface 51; a flash memory 55 for storing of information that is remains persistent in memory over device restarts; an infrared remote control receiver 56 for receiving remote control commands; a random access memory 57 for storing of information that is lost when the device restarts; a HML interface 53 for connecting the device to a host device such as a digital television (DTV; not shown); and a power controller circuit 54 for receiving power from the HML interface or from an external power adapter (not shown). The power controller distributes power to all components of the STB. If the STB is not connected to the external power adapter, it uses the power received from the HML interface. The power controller comprises a power level monitoring circuit that allows power monitoring, e.g. when the device is connected to the DTV and receives its power from the HML interface, and indicates to the CPU if the device is connected to an external power adapter or not. When the device 50 boots, the CPU reads out the power monitoring circuit to find out if the device is connected to an external power adapter or not. If not, the device receives its power from the HML interface, and the CPU reads out the monitoring circuit to obtain the maximum level of power drawn from the HML interface and stores it in flash memory. Upon each subsequent restart of the device 50 caused by a power surge/drop due to the device 50 drawing an excess level of power from the DTV via the HML interface, the device 50 limits the level of power drawn from the DTV to a new maximum level that is lower than the limit level stored in flash memory, and stores of the new maximum level as the limit level in flash memory. As has been previously described, according to a variant embodiment, if the device 50 is equipped with a battery, it is not necessary to restart the device when the device 50 experiences a power surge/drop of the power supplied to the device 50 by the host device.

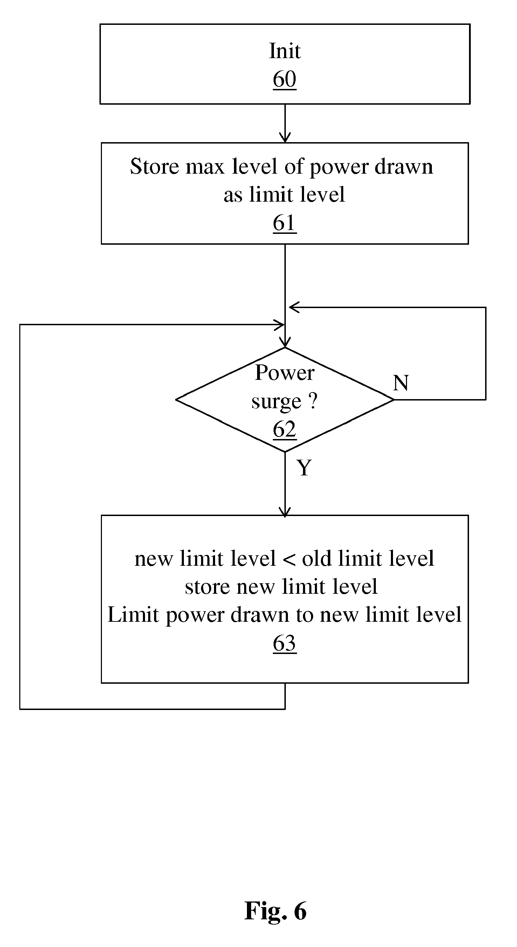

**Figure 6** is a flow chart of an advantageous embodiment, implemented for example by device 50 of figure 5. In a first step (60), the method is initialized. In a second step (61), a maximum level of power drawn from the host device, is stored as a limit level. Then, upon each subsequent reestablishing of power (62) supplied by the host device to the peripheral device after a drop of power from the power supply due to the first device drawing an excess level of power from said second device, the level of power drawn from said second device is limited (63) to a maximum level that is lower than the stored limit level, and the maximum level is stored as the new limit level.

As will be appreciated by one skilled in the art, aspects of the present principles can be embodied as a system, method or computer readable medium. Accordingly, aspects of the present principles can take the form of an entirely hardware embodiment, en entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of power management, **characterized in that** the method is implemented by a first device connected to a second device via an interface of said second device, said interface providing a data communication link for data communication between said first device and said second device and a power supply for said first device, said method comprising:
storing (61) of a maximum level of power drawn from the second device, as a limit level;
upon each subsequent reestablishing of power supplied by said second device to said first device after a drop of power (62) from said power supply due to the first device drawing an excess level of power from said second device, limiting (63) the level of power drawn from said second device to a maximum level that is lower than said stored limit level, and storing of said maximum level as said limit level.

2. The method according to claim 1, further comprising a restart of said first device after said reestablishing of power supplied by the second device.

3. The method according to claim 1 or 2, wherein said storing of said maximum level as said limit level comprises a storing of an identifier of said second device and associating of said identifier with said limit level.

4. The method according to any of claims 1 to 3, wherein the limit level, after a predetermined delay of time without experiencing a subsequent drop of the power supplied by the second device to the first device, is stored as the limit level to be used for the second device.

5. The method according to any of claims 1 to 4, wherein the limit level, after a predetermined delay of time without experiencing a subsequent drop of the power supplied by the second device to the first device, is adjusted by increasing the limit level until a drop of the power supplied by the second device is caused due to the first device drawing an excess level of power from said second device, and setting the limit level to the last stored limit value minus a security margin.

6. The method according to any of claims 1 to 5, wherein said limiting the level of power drawn from the second device comprises reducing of a clock speed of at least one processing unit of said first device.

7. The method according to any of claims 1 to 6, wherein said limiting the level of power drawn from the second device comprises spreading out over time of executing of tasks programmed for being executed upon startup of said first device.

8. The method according to any of claims 1 to 7, wherein said limiting the level of power drawn from the second device comprises reducing of at least one functionality of said first device.

9. A peripheral device, **characterized in that** the peripheral device is connected to a host device via an interface of the host device providing a data communication link for communication between the peripheral device and the host device and for providing a power supply to the peripheral device, the peripheral device comprising:
a memory (55, 57) for storing of a maximum level of power drawn from the host device as a limit level;
a power controller (54) for, upon each subsequent reestablishing of power supplied by the host device to the peripheral device after a drop of power from said power supply due to the peripheral device drawing an excess level of power from said host device, limiting the level of power drawn from said host device to a maximum level that is lower than the limit level stored in said memory, and storing of said maximum level as said limit level in said memory.

10. The device according to claim 9, further comprising a reset unit (58) for start up of the peripheral device after said reestablishing of power supplied by the host device.
